# EUROPÄISCHE PATENTSCHRIFT

(11) **EP 0 896 658 B1**
(45) Veröffentlichungstag und Bekanntmachung des Hinweises auf die Patenterteilung: **06.03.2002**
(21) Anmeldenummer: 97920600.0
(22) Anmeldetag: 14.04.1997
(51) Int. Cl.: G01L 9/00, G01L 7/08, G01L 13/02

(54) **MIKROMECHANISCHER DRUCK- UND KRAFTSENSOR**
MICROMECHANICAL PRESSURE AND FORCE SENSOR
DETECTEUR MICROMECANIQUE DE PRESSION ET DE FORCE

(30) Priorität: 03.05.1996 DE 19617696
(43) Veröffentlichungstag der Anmeldung: 17.02.1999
(73) Patentinhaber: Bilger, Thomas, 79426 Buggingen (DE)
(72) Erfinder: Bilger, Thomas, 79426 Buggingen (DE)
(86) Internationale Anmeldenummer: DE9700757
(87) Internationale Veröffentlichungsnummer: WO9742477

(56) Entgegenhaltungen:
- DE-A- 4 106 288
- DE-A- 4 111 119
- DE-C- 4 436 299
- US-A- 4 730 496
- US-A- 5 055 838
- PATENT ABSTRACTS OF JAPAN vol. 008, no. 278 (P-322), 19.Dezember 1984 & JP 59 145940 A (YOKOGAWA HOKUSHIN DENKI KK), 21.August 1984,
- PATENT ABSTRACTS OF JAPAN vol. 095, no. 010, 30.November 1995 & JP 07 167725 A (YAZAKI CORP), 4.Juli 1995,
- PATENT ABSTRACTS OF JAPAN vol. 095, no. 004, 31.Mai 1995 & JP 07 027645 A (YAMATAKE HONEYWELL CO LTD), 31.Januar 1995,

## Beschreibung

Die Erfindung betrifft einen mikromechanischen Druckund Kraftsensor mit einer Membranplattenanordnung und einer Elektrodenanordnung, deren Kapazitätswerte durch auf die Membranplattenanordnung einwirkende Kräfte veränderbar sind.

Aus der EP 0 138 893 B1 ist ein Drucksensor bekannt, der eine untere Siliziumscheibe aufweist, die durch eine weitere obere Siliziumscheibe abgedeckt ist. In die obere Siliziumscheibe ist durch Siliziumätzen eine Membran erstellt worden. Auf der der unteren Siliziumscheibe zugewandten Innenseite der oberen Siliziumscheibe ist eine Meßelektrode ausgebildet, die einer auf der unteren Siliziumscheibe angeordneten Gegenelektrode gegenüberliegt. Wenn die Membran einem an der oberen Siliziumscheibe anliegenden äußeren Druck ausgesetzt ist, verringert sich der Abstand der Meßelektrode zur Gegenelektrode, und die Kapazität des von der Meßelektrode und der Gegenelektrode gebildeten Kondensators nimmt zu. Durch Messung der Kapazität ist demnach der an der oberen Siliziumscheibe anliegende Druck bestimmbar.

Der bekannte Drucksensor eignet sich insbesondere für Absolutdruckmessungen. Relativdruckmessungen lassen sich nur nach Füllung der sich zwischen der unteren Siliziumscheibe und der oberen Siliziumscheibe befindenden Meßkammer mit einem Gas durchführen. In diesem Zustand ist mit dem bekannten Drucksensor der Druck des sich in der Meßkammer befindenden Gases im Verhältnis zum Außendruck bestimmbar.

Die DE 41 11 118 A1 zeigt einen Drucksensor, der zur Messung von Differenzdrücken zwei Druckkammern aufweist. Gegenüber einer auf einem starren Elektrodendeckel befindlichen Festelektrode ist eine auf einer elastischen Membran aufgebrachte bewegliche Elektrode angeordnet. Auf der zur festen Elektrode zeigenden gegenüberliegenden Seite der Membran befindet sich ein Anschlußdeckel. Zwischen dem Elektrodendeckel und der Membran einerseits und zwischen der Membran und dem Anschlußdeckel andererseits befinden sich zwei Druckkammern mit jeweils einer Durchgangsöffnung zur Zuführung von Drücken. Sind beide Druckkammern mit unterschiedlichen Drücken beaufschlagt, bestimmt die Druckdifferenz zwischen den beiden Kammern den Abstand der beweglichen Elektrode zur Festelektrode und damit die zur Druckdifferenzmessung verwendete Kapazität des Kondensators, der aus den beiden Elektroden gebildet wird.

In der DE 44 36 299 C1 ist eine Drucksensor-Chipstruktur mit einer Klemmeinrichtung zur Messung von Differenzdrücken offenbart, wobei die Klemmeinrichtung sowohl zum Kontaktieren und Halten der Drucksensor-Chipstruktur dient als auch der Zuführung der zu untersuchenden Flüssigkeiten oder Gase. Die Chipstruktur ist mit der Klemmeinrichtung beispielsweise durch Kleben verbunden und gewährt so einem Gas oder einer Flüssigkeit über in der Chipstruktur befindliche Kanäle Zugang zu einer Meßkammer.

Da die oben beschriebenen Differenzdrucksenoren Flüssigkeits- oder Gaszuführungen aufweisen, sind derartige Vorrichtungen verhältnismäßig fehleranfällig und für die Herstellung in großen Serien ungeeignet.

Andererseits besteht aber auf den verschiedensten technischen Gebieten, wie beispielsweise bei hydraulischen Anwendungen im Heizungsbau, in der Verkehrstechnik oder in der Verfahrenstechnik, ein großer Bedarf an kostengünstigen Differenzdrucksensoren, mit denen Druckdifferenzen auch bei hohen statischen Drücken mit hoher Genauigkeit meßbar sind.

Ausgehend von diesem Stand der Technik liegt der Erfindung die Aufgabe zugrunde, einen mikromechanischen Druck- und Kraftsensor zu schaffen, der auf einfache Weise herstellbar ist und mit dem Druckdifferenzen mit hoher Genauigkeit meßbar sind.

Diese Aufgabe wird dadurch gelöst, daß die Membranplattenanordnung eine Vielzahl von auf beiden Seiten von wenigstens einer Grundplatte angeordneten Membranplatten umfaßt, die durch wenigstens ein im Bereich der Grundplatte ausgebildetes Koppelelement kraftmäßig verbunden sind, und daß der Abstand der Membranplatten zu der zwischen den Membranplatten angeordneten Grundplatte mit Hilfe der Elektrodenanordnung meßbar ist.

Dadurch, daß wenigstens zwei Membranplatten jeweils durch wenigstens ein Koppelelement kraftmäßig verbunden sind, führt eine Druckdifferenz zwischen den außenseitig an den Membranplatten anliegenden Drücken zu einer Bewegung der Membranplatten und damit zu einer Abstandsänderung der Membranplatten bezüglich der sich zwischen den Membranplatten befindenden Grundplatte. Diese Lageänderung ist mit Hilfe der Elektrodenanordnung erfaßbar.

Da keine besonderen Leitungsanschlüsse für die zu vergleichenden Fluide an dem Drucksensor vorzusehen sind, lassen sich mit dem mikromechanischen Druck- und Kraftsensor Druckdifferenzen auf einfache Weise messen. Außerdem lassen sich die Bauteile des mikromechanischen Druck- und Kraftsensors auf einfache und bewährte Weise aus Siliziummaterial fertigen, so daß die Herstellung sehr kostengünstig ist.

Da sich Kapazitäten im allgemeinen mit hohen Genauigkeiten messen lassen, verfügt der mikromechanische Druck- und Kraftsensor auch über ein hohes Maß an Meßgenauigkeit.

Nachfolgend wird ein bevorzugtes Ausführungsbeispiel der Erfindung anhand der Figuren näher beschrieben. Es zeigen:
- Fig. 1: eine Querschnittsansicht eines Ausführungsbeispiels des mikromechanischen Druck- und Kraftsensors,
- Fig. 2: eine Draufsicht auf eine Grundplatte des Druck- und Kraftsensors aus Fig. 1,
- Fig. 3: eine Draufsicht auf eine Membranplatte des Druck- und Kraftsensors aus Fig. 1,
- Fig. 4: eine Querschnittsansicht eines weiteren Ausführungsbeispiels der Erfindung,
- Fig. 5: eine Draufsicht auf die Grundplatte des Ausführungsbeispiels aus Fig. 4 und
- Fig. 6: eine Draufsicht auf die Membranplatte des Ausführungsbeispiels aus Fig. 4.

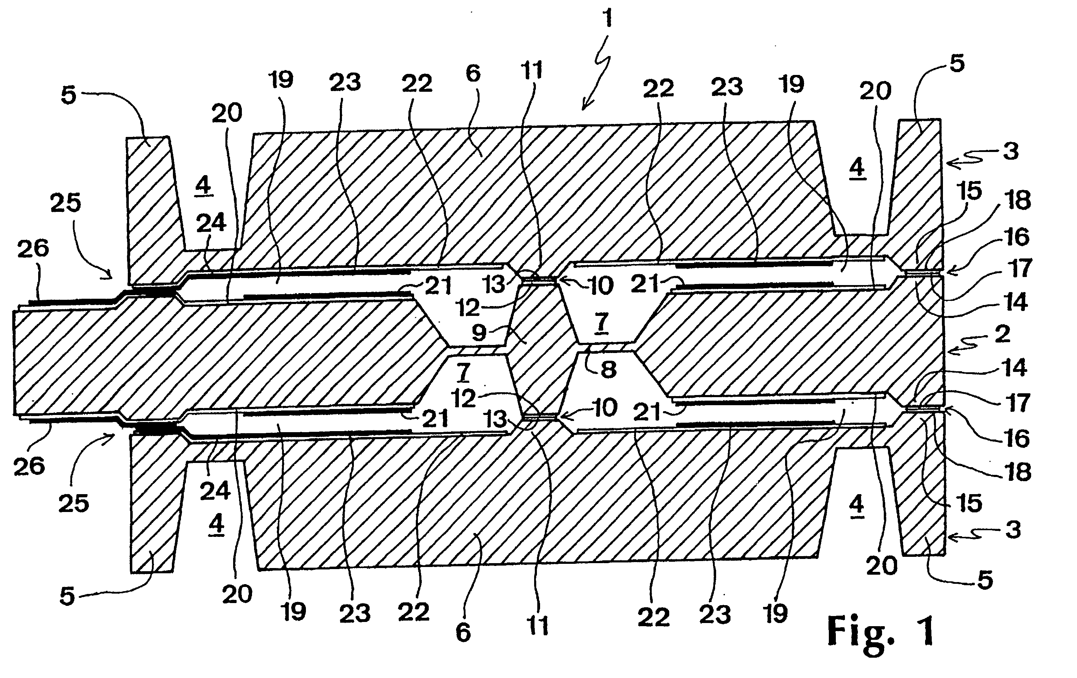

Fig. 1 zeigt ein erstes bevorzugtes Ausführungsbeispiel eines Kraft- und Drucksensors 1. Der Druck- und Kraftsensor 1 weist eine Grundplatte 2 auf, auf deren Ober- und Unterseite jeweils eine Membranplatte 3 aufgebracht ist. Die Grundplatte 2 und die Membranplatten 3 weisen Dicken von 0,5 Millimeter und Längenabmessungen von 3 bis 6 Millimeter auf. In den Randbereichen der Membranplatten 3 sind umlaufende Biegenuten 4 eingebracht, durch die die Membranplatten 3 geschwächt sind. Dadurch sind die Membranplatten 3 an dieser Stelle verformbar. Durch die Biegenuten 4 sind am Rand der Membranplatten 3 Befestigungsstege 5 ausgebildet, an denen der Druck- und Kraftsensor 1 in eine in der Zeichnung nicht dargestellte Haltevorrichtung einspannbar ist. Außerdem ist durch die Biegenuten 4 ein steifer Membrankörper 6 ausgebildet, an dem die zu messenden Außendrücke oder Kräfte angreifen.

In der Grundplatte 2 bilden zwei jeweils von der einen Seite in die Grundplatte 2 eingebrachte Gruben 7 ein von einer dünnen Haltemembran 8 gehaltenes Koppelelement 9 in der Grundplatte 2 aus. Das Koppelelement 9 ist an seinen beiden Enden über Koppelkontakte 10 an Koppelerhöhungen 11 an den Membrankörpern 6 befestigt. Die beiden Koppelkontakte 10 sind eutektische Verbindungen, die durch jeweils eine auf das Koppelelement 9 aufgebrachte Koppelkontaktschicht 12 und eine weitere auf die Koppelerhöhung 11 aufgebrachte Koppelkontaktschicht 13 bewerkstelligt sind. Da die Koppelkontakte 10 feste eutektische Verbindungen bilden, sind mit dem in Fig. 1 dargestellten Druck- und Kraftsensor 1 nicht nur Außendrücke, sondern auch auf die Membranplatten 3 einwirkende Zugkräfte meßbar.

Außerdem ist an der Grundplatte eine Randleiste 14 ausgebildet, die mit einer gegenüberliegenden Randleiste 15 der Membranplatten 3 über einen Randkontakt 16 verbunden ist. Der Randkontakt 16 ist eine eutektische Verbindung, die wie die Koppelkontakte 10 durch einen auf der Randleiste 14 aufgebrachten Randstreifen 17 und einen weiteren auf der Randleiste 15 aufgebrachten Randstreifen 18 gebildet ist. Durch den Randkontakt 16 und die Kuppelkontakte 10 sind die Membranplatten 3 mit der Grundplatte 2 elektrisch und mechanisch verbunden. Die Randleisten 14 und 15 begrenzen einen zwischen der jeweiligen Membranplatte 3 und der Grundplatte 2 ausgebildeten Meßraum 19, dessen Volumen bei Einwirken einer äußeren Kraft auf den Membrankörper 6 durch die Abstandsänderung zwischen Membrankörper 6 und Grundplatte 2 vergrößert oder verkleinert wird.

Zur Messung der Abstandsänderung ist auf der Grundplatte 2 auf jeweils einer Isolierschicht 20 eine Meßelektrode 21 aufgebracht. Den Meßelektroden 21 gegenüberliegend, sind auf weiteren Isolierschichten 22, die auf den Membranplatten 3 aufgebracht sind, Gegenelektroden 23 ausgebildet. Die Gegenelektroden 23 sind mit Anschlußleitungen 24 verbunden, die durch Öffnungen 25 in den Randleisten 14 und 15 zu Anschlußkontakten 26 geführt sind. An die Anschlußkontakte 26 sind in der Zeichnung nicht dargestellte Zuleitungen anschließbar. Die Öffnung 25 dient darüber hinaus dazu, den Meßraum 19 zu entlüften und einen Druckausgleich herbeizuführen.

In Fig. 1 wurde der Deutlichkeit halber der Abstand zwischen den Meßelektroden 21 und den Gegenelektroden 23 stark übertrieben gezeichnet. Üblicherweise beträgt der Abstand zwischen den Meßelektroden 21 und den Gegenelektroden 23 in etwa 5 Mikrometer.

Der in Fig. 1 dargestellte Druck- und Kraftsensor 1 eignet sich insbesondere zur Messung von Druckdifferenzen. Ist der an der einen Membranplatte 3 anliegende Außendruck größer als der an der anderen Membranplatte 3 anliegende Außendruck, so werden die Gegenelektroden 23 der einen Membranplatte 3 zu den Meßelektroden 21 der Grundplatte 2 hin bewegt und die Gegenelektroden 23 der anderen Membranplatte 3 von den gegenüberliegenden Meßelektroden 21 der Grundplatte 2 weg bewegt. Die dadurch eintretende Kapazitätsänderung der von den Meßelektroden 21 und den Gegenelektroden 23 gebildeten Kondensatoren ist beispielsweise durch eine Brückenschaltung meßbar. Da bei dem Druck- und Kraftsensor 1 eine Zunahme der Kapazität bei dem einen Elektrodenpaar stets mit einer Abnahme der Kapazität des anderen Elektrodenpaares einhergeht, läßt sich mit dem Druck- und Kraftsensor 1 eine Meßvorrichtung bauen, die im Vergleich zu einer Meßvorrichtung, die einen herkömmlichen, einfachen, ein einzelnes Elektrodenpaar aufweisenden Drucksensor verwendet, eine doppelt so hohe Meßgenauigkeit aufweist.

Der dynamische Bereich der Druckmessung läßt sich auf einfache Weise durch die Tiefe der Biegenuten 4 festlegen. Je tiefer die Biegenuten 4 sind, um so größer ist die Schwächung der Membranplatten 3 im Bereich der Biegenuten 4, um so empfindlicher ist der Druck- und Kraftsensor 1 auf Druckänderungen, und desto kleiner ist auch der dynamische Meßbereich des Druck- und Kraftsensors 1.

Durch dieses Merkmal eignet sich der Druck- und Kraftsensor 1 insbesondere für ein modulares Herstellungsverfahren. Bei der Herstellung des Druck- und Kraftsensors 1 werden zunächst die Grundplatten 2 in großen Serien gefertigt. Die Membranplatten 3 werden jedoch nach den Spezifikationen des Kunden je nach gewünschtem Druckbereich und erforderlicher Empfindlichkeit angefertigt.

Der Druck- und Kraftsensor 1 läßt sich nicht nur zu Relativdruckmessungen, sondern auch zu Absolutdruckmessungen verwenden. Dazu ist der Druck- und Kraftsensor 1 auf eine ebene Unterlage aufzubringen und der zu messende Druck an eine der Membranplatten 3 anzulegen.

Allgemein gilt, daß sich der Druck- und Kraftsensor 1 wegen der hohen Bruchfestigkeit des zur Herstellung der Membranplatten 3 und der Grundplatte 2 verwendeten Siliziummaterials auch für hohe statische Drücke eignet.

Ein Vorteil des Druck- und Kraftsensors 1 ist, daß er in der Herstellung verhältnismäßig kostengünstig ist. Als Basismaterial für die Grundplatte 2 und die Membranplatte 3 kommt Silizium in Frage, in das die Biegenuten 4, die Randleisten 14, die Koppelerhöhung 11, die Gruben 7 sowie die Randleisten 15 durch Siliziumätzen einätzbar sind. Die Isolierschichten 20 und 22 sind üblicherweise aus SiO₂. Als Material für die Meßelektrode 21 und Gegenelektrode 23 eignet sich aufgrund seiner hohen Korrosionsbeständigkeit insbesondere Gold. Gold bildet auch das Material für die Koppelkontaktschichten 12 und 13 sowie für die Randstreifen 17 und 18. Die Isolierschichten 20 und 22 sowie die Koppelkontaktschichten 12 und 13 und die Randstreifen 17 und 18 sind in der üblichen Lithographietechnik herstellbar. Da zum Ätzen und Beschichten der Grundplatte 2 und der Membranplatte 3 nur etwa zehn Masken notwendig sind, ist die Herstellung des Druck- und Kraftsensors 1 auch in dieser Hinsicht verhältnismäßig kostengünstig.

Um die Membranplatten 3 an der Grundplatte 2 zu befestigen, werden die Membranplatten 3 auf die Grundplatte 2 aufgelegt und der Druck- und Kraftsensor 1 im Vakuum unter Ausübung von Druck erhitzt. Das die Koppelkontaktschichten 12 und 13 sowie die Randstreifen 17 und 18 bildende Gold wird vom Silizium der Membranplatten 3 und der Grundplatte 2 absorbiert und es entsteht ein Eutektikum aus den Materialien Silizium und Gold, das nach dem Abkühlen die eutektische Verbindung zwischen den Membranplatten 3 und der Grundplatte 2 bildet. Dementsprechend dienen die Isolierschichten 20 und 22 nicht nur dazu, die Meßelektrode 21 und die Gegenelektrode 23 von der Grundplatte 2 und den Membranplatten 3 zu isolieren, sondern auch dazu, die Absorption der Meßelektrode 21 und der Gegenelektrode 23 in das Siliziummaterial der Grundplatte 2 und der Membranplatten 3 zu verhindern.

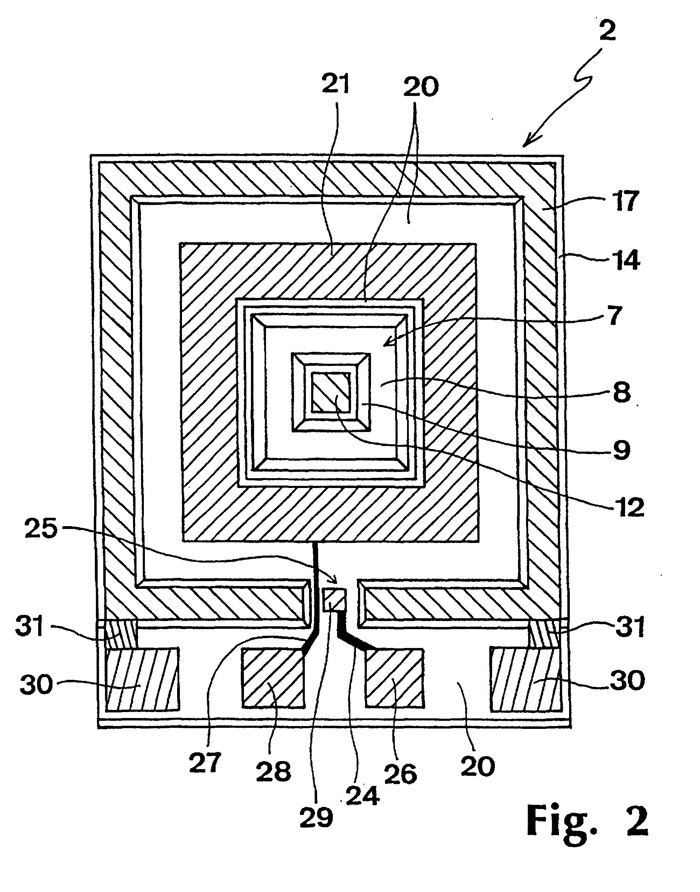

Fig. 2 zeigt eine Draufsicht auf die Grundplatte 2 des Druck- und Kraftsensors 1 aus Fig. 1. Im Mittenbereich der Grundplatte 2 ist die Koppelkontaktschicht 12 erkennbar, die auf dem Koppelelement 9 aufgebracht ist. Das Koppelelement 9 ragt aus der Grube 7 hervor, die von der auf der Isolierschicht 20 aufgebrachten Meßelektrode 21 umschlossen ist. Um die Fertigung zu erleichtern, ist die Grube 7 der Kristallstruktur der Grundplatte 2 folgend im Grundriß rechteckig ausgebildet. Die im Grundriß der Grube 7 folgende Meßelektrode 21 weist dementsprechend ebenfalls einen rechteckförmigen Grundriß auf.

Die Isolierschicht 20 ist von der Randleiste 14 umgeben, auf die der Randstreifen 17 aufgebracht ist. Durch die Öffnung 25 in der Randleiste 14 ist eine Anschlußleitung 27 von der Meßelektrode 21 zu einem Anschlußkontakt 28 geführt. Außerdem befindet sich in der öffnung 25 ein Anschlußpreßkontakt 29, der die Verbindung zu der Gegenelektrode 23 der Membranplatte 3 herstellt. Die Anschlußleitung 24 verbindet den Anschlußpreßkontakt 29 mit dem Anschlußkontakt 26 für die Gegenelektrode 23. Außerdem sind auf der Grundplatte 2 Massenkontakte 30 angeordnet, die über Massestreifen 31 eine Masseverbindung mit dem Material der Grundplatte 2 und dem Material der mit der Grundplatte 2 verbundenen Membranplatten 3 herstellen. Auf diese Weise ist der von der Meßelektrode 21 und der Gegenelektrode 23 gebildete Kondensator gegen Störfelder abgeschirmt.

Die Verbindung des Anschlußpreßkontaktes 29 mit dem Anschlußpreßkontakt 32 wird bei dem Zusammenfügen der Grundplatte 2 mit den Membranplatten 3 durch den dabei ausgeübten Anpreßdruck bewerkstelligt. Durch diesen Anpreßdruck verschmilzt der Anschlußpreßkontakt 29 mit dem Anschlußpreßkontakt 32.

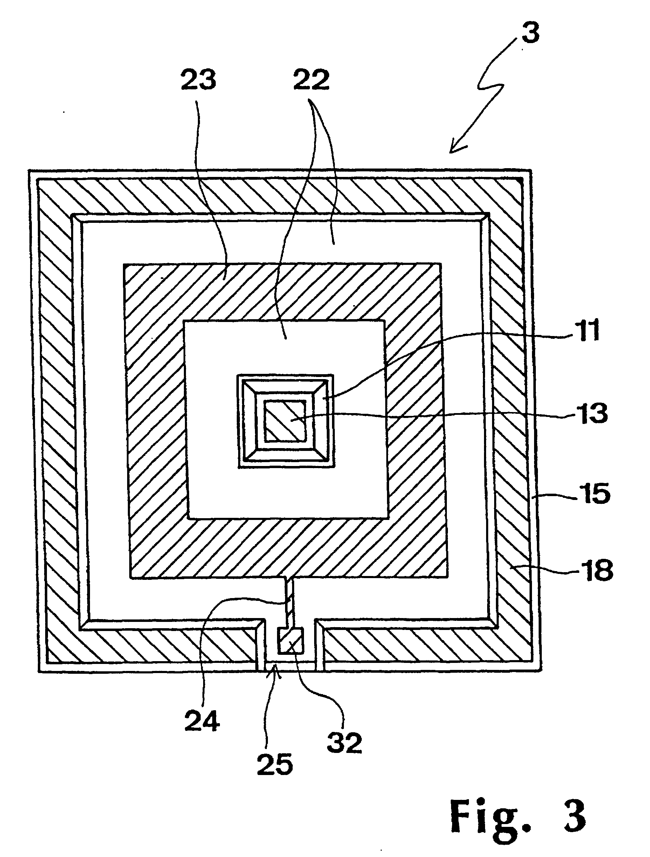

Fig. 3 zeigt eine Draufsicht auf die Membranplatte 3 des Druck- und Kraftsensors 1 aus Fig. 1. Man erkennt die Koppelerhöhung 11, auf die die Koppelkontaktschicht 13 aufgebracht ist. Ferner ist die der Meßelektrode 21 gegenüberliegende Gegenelektrode 23 erkennbar, die über die Anschlußleitung 24 mit einem dem Anschlußpreßkontakt 29 gegenüberliegenden Anschlußpreßkontakt 32 verbunden ist. Die Gegenelektrode 23 befindet sich auf einer Isolierschicht 22, die von der Randleiste 15 umgeben ist, auf der sich der Randstreifen 18 zur Herstellung einer eutektischen Verbindung der Membranplatte 3 mit der Grundplatte 2 befindet.

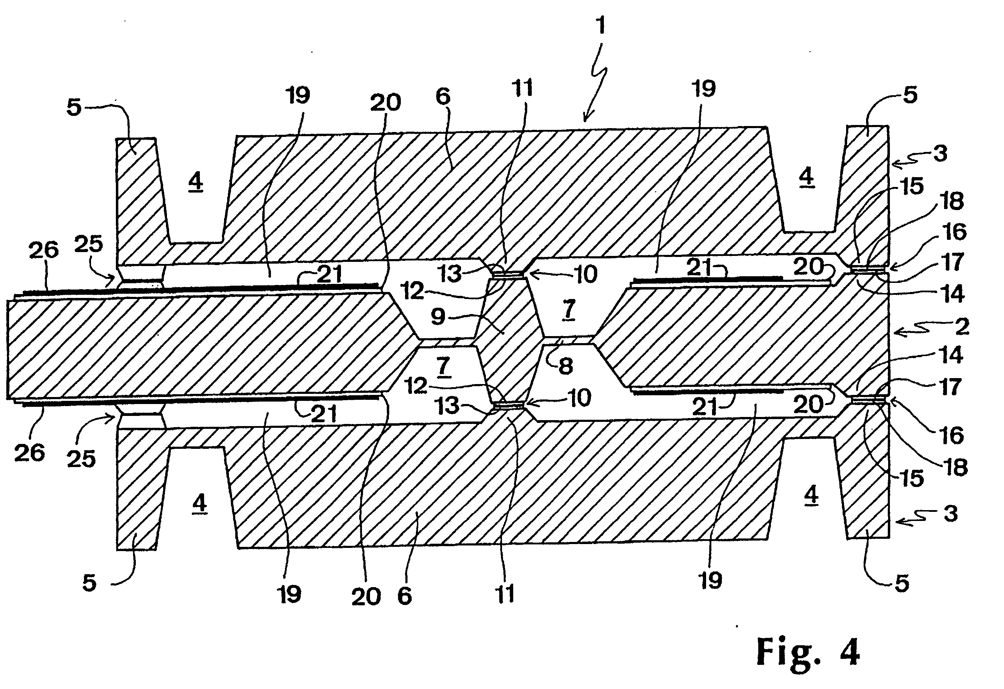

Fig. 4 zeigt ein weiteres bevorzugtes Ausführungsbeispiel des Druck- und Kraftsensors 1, bei dem die Kapazität der Meßelektrode 21 gegen Masse gemessen wird. Dieses Ausführungsbeispiel zeichnet sich durch seinen besonders einfachen Aufbau aus.

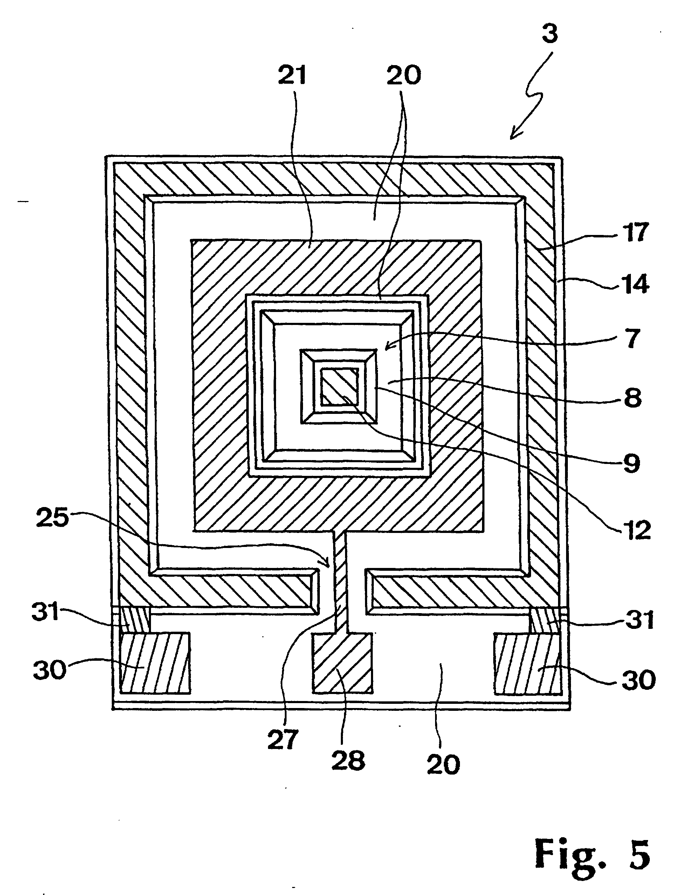

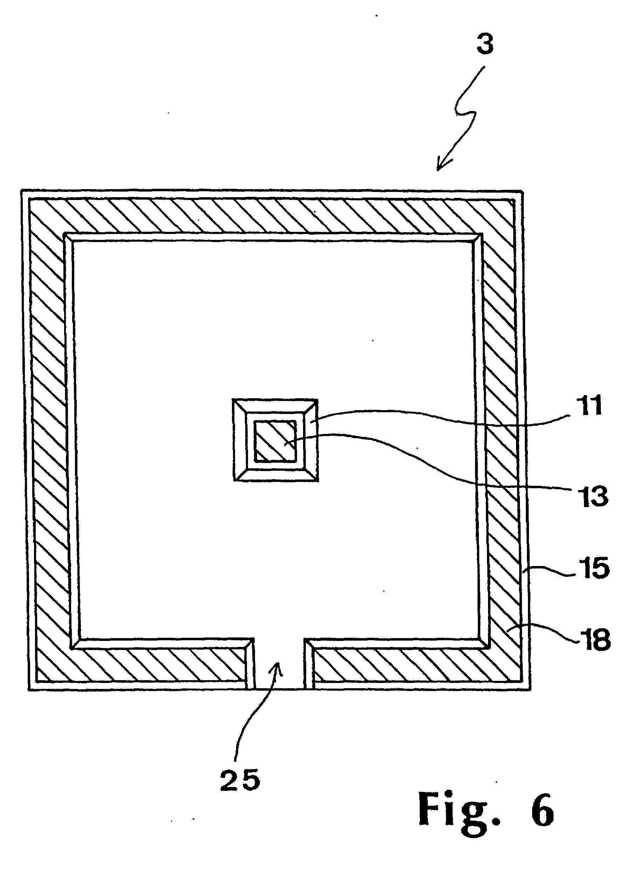

Wie in Fig. 5 und 6 erkennbar ist, entfällt bei diesem Ausführungsbeispiel auf der Grundplatte 2 der Anschlußkontakt 26, die Anschlußleitung 24 sowie der Anschlußpreßkontakt 29, wodurch die Führung der Anschlußleitung 27 durch die Öffnung 25 hindurch vereinfacht ist.

Auf der Membranplatte entfallen neben dem Anschlußpreßkontakt 32 und der Anschlußleitung 24 auch die Gegenelektrode 23, wodurch die Herstellung der Membranplatten 3 und der Grundplatte 2 wesentlich erleichtert ist.

Bei einem abgewandelten Ausführungsbeispiel ist eine Vielzahl der wie in Fig. 1 bis 6 dargestellten Druck- und Kraftsensoren aufeinander gestapelt und die Meßelektroden und Gegenelektroden elektrisch parallel geschaltet. Dadurch läßt sich der dynamische Meßbereich des Druck- und Kraftsensors wesentlich erhöhen.

Abschließend sei angemerkt, daß bei einem weiteren abgewandelten Ausführungsbeispiel lediglich Gegenelektroden auf den Membranplatten vorhanden sind, deren Kapazität gegen Masse zur Bestimmung des Abstandes der Membranplatten zur Grundplatte verwendet wird.

Bei einem weiteren abgewandelten Ausführungsbeispiel ist schließlich anstatt zwei Meß- und Gegenelektrodenpaaren nur ein einzelnes Meß- und Gegenelektrodenpaar oder lediglich ein einzelnes Meß- oder Gegenelektrodenpaar vorhanden.

## Patentansprüche

1. Mikromechanischer Druck- und Kraftsensor mit einer Membranplattenanordnung (3) und einer Elektrodenanordnung (21, 23), deren Kapazitätswerte durch auf die Membranplattenanordnung (3) einwirkende Kräfte veränderbar ist, **dadurch gekennzeichnet, daß** die Membranplattenanordnung (3) eine Vielzahl von auf beiden Seiten von wenigstens einer Grundplatte (2) angeordneten Membranplatten (3) umfaßt, die durch wenigstens ein im Bereich der Grundplatte (2) ausgebildetes Koppelelement (9) kraftmäßig verbunden sind, und daß der Abstand der Membranplatten (3) zu der jeweils zwischen den Membranplatten (3) angeordneten Grundplatte (2) mit Hilfe der Elektrodenanordnung (21, 23) meßbar ist.

2. Mikromechanischer Druck- und Kraftsensor nach Anspruch 1, **dadurch gekennzeichnet, daß** die zwischen den Membranplatten (3) angeordnete Grundplatte (2) entlang einer Seite zwischen den Membranplatten (3) hervorsteht und dort mit Anschlußkontakten (26, 28) versehen ist, die über Anschlußleitungen (24, 27) zu der Elektrodenanordnung (21, 23) führen.

3. Mikromechanischer Druck- und Kraftsensor nach Anspruch 2, **dadurch gekennzeichnet, daß** der zwischen jeweils einer Membranplatte (3) und der Grundplatte (2) ausgebildete Meßraum (19) zur Seite hin durch auf den Membranplatten (3) und der Grundplatte (2) ausgebildeten Randleisten (14, 15) begrenzt ist.

4. Mikromechanischer Druck- und Kraftsensor nach Anspruch 3, **dadurch gekennzeichnet, daß** in den Randleisten (14, 15) eine Öffnung (25) ausgebildet ist, durch die die Anschlußleitungen (24, 27) von den Anschlußkontakten (26, 28) zur Elektrodenanordnung (21, 23) hindurchgeführt sind.

5. Mikromechanischer Druck- und Kraftsensor nach einem der vorstehenden Ansprüche, **dadurch gekennzeichnet, daß** die Membranplatten (3) durch außenseitig im Randbereich in die Membranplatten (3) eingebrachte Biegenuten (4) geschwächt sind.

6. Mikromechanischer Druck- und Kraftsensor nach einem der vorstehenden Ansprüche,- **dadurch gekennzeichnet, daß** das Koppelelement (9) in der Mitte der Meßkammer (19) durch beidseitig in die Grundplatte (2) eingebrachte Gruben (7) ausgebildet ist.

7. Mikromechanischer Druck- und Kraftsensor nach Anspruch 6, **dadurch gekennzeichnet, daß** die in der Grundplatte (2) ausgebildeten Gruben (7) von umlaufenden Meßelektroden (21) umgeben sind.

8. Mikromechanischer Druck- und Kraftsensor nach Anspruch 7, **dadurch gekennzeichnet, daß** auf der Membranplatte (3) eine der Meßelektrode (21) gegenüberliegende Gegenelektrode (23) angeordnet ist.

9. Mikromechanischer Druck- und Kraftsensor nach einem der Ansprüche 3 bis 8, **dadurch gekennzeichnet, daß** die Randleisten (14, 15) und das Koppelelement (9) der Grundplatte (2) durch eutektische Verbindungen (10, 16) mit den Membranplatten (3) elektrisch und mechanisch verbunden sind.

10. Mikromechanischer Druck- und Kraftsensor nach einem der vorstehenden Ansprüche, **dadurch gekennzeichnet, daß** die Grundplatte (2) und die Membranplatte (3) an eine Masseleitung anschließbar sind.

## Claims

1. Micromechanical pressure and force sensor with an arrangement of membrane plates (3) and an arrangement of electrodes (21, 23) which variable capacitance varies by acting forces to the arrangement of membranes (3), which is characterized, that the arrangement of membranes (3) includes a plurality of membrane plates (3) arranged on both sides of at least one base plate (2), which are interconnected by force in the area of the base plate (2) with at least one coupling element (9), so that the distance of membrane plate (2) between the base plate (2) and the membrane plates (3) can be measured with an arrangement of electrodes (21, 23).

2. Micromechanical pressure and force sensor according to Claim 1, which is characterized , that the base plate (2), which is arranged between the membrane plates (3), stuck out on one side between the membrane plates (3) and had connecting contacts (26, 28), which are connected over connecting wires (24, 27) to the arrangement of electrodes (21, 23).

3. Micromechanical pressure and force sensor according to Claim 2 , which is characterized , that the measuring chamber (19) between each of one side of membrane plate (3) and the base plate (2) is defined by a shoulder (14, 15) interposed between membrane plate (3) and base plate (2).

4. Micromechanical pressure and force sensor according to Claim 3 , which is characterized , that said shoulders (14, 15) had a dip (25) for carried through the connecting wires (24, 27) from the connecting contacts (26, 28) to the arrangements of electrodes (21, 23).

5. Micromechanical pressure and force sensor according to one of the precedent Claims , which is characterized , that the membrane plates (3) had bending slots (4) outside in the border of the membrane plates (3).

6. Micromechanical pressure and force sensor according to one of the precedent Claims , which is characterized , that the coupling element (9) in the mid of the measuring chamber (19) is built through cavities (19) on both side of the base plate (2).

7. Micromechanical pressure and force sensor according to Claim 6 , which is characterized , that the cavities (7) in the base plate (3) are surrounded with measuring electrodes (21).

8. Micromechanical pressure and force sensor according to Claim 7 , which is characterized , that on the membrane plate (3) is arranged an second electrode (23) which is in opposite of the measuring electrode (21).

9. Micromechanical pressure and force sensor according to one of the Claims 3 - 8, which is characterized , that the shoulders (14, 15) and the coupling element (9) of the base plate (2) are electrical and mechanical interconnected with eutectic bondings (10, 16).

10. Micromechanical pressure and force sensor according to one of the precedent Claims , which is characterized , that the base plate (2) and the membrane plate (3) are connectable to a shield potential.

## Revendications

1. Capteur micromécanique de pression et de force comportant une structure composée de plaques à membrane (3) et une structure composée d'électrodes (21, 23) dont les valeurs de capacité varient en fonction des forces agissant sur la structure composée de plaques à membrane (3), **caractérisé en ce que** la structure composée de plaques à membrane (3) comporte de nombreuses plaques à membrane (3), disposées sur les deux côtés d'au moins une plaque de base (2), lesquelles sont connectées dynamométriquement par au moins un coupleur (9) formé dans le secteur de la plaque de base (2) et **en ce que** la distance des plaques à membrane (3) à la plaque de base (2) disposée entre les plaques à membrane (3) est mesurable à l'aide de la structure composée d'électrodes (21, 23).

2. Capteur micromécanique de pression et de force selon la revendication 1, **caractérisé en ce que** la plaque de base (2) disposée entre les plaques à membrane (3) fait saillie le long d'une extrémité entre les plaques à membranes (3) et est munie à cet endroit de contacts de branchement (26, 28), lesquels sont connectés à la structure composée d'électrodes (21, 23) par l'intermédiaire de conducteurs de raccordement (24, 27).

3. Capteur micromécanique de pression et de force selon la revendication 2, **caractérisé en ce que** la chambre de mesure (19) délimitée par une plaque à membrane (3) et la plaque de base (2) est limitée latéralement par les rebords (14, 15) formés sur la plaque à membrane (3) et sur la plaque de base (2).

4. Capteur micromécanique de pression et de force selon la revendication 3, **caractérisé en ce qu'**une ouverture (25) est formée dans les rebords (14, 15), par laquelle les conducteurs de raccordement (24, 27) sont conduits des contacts de branchement (26, 28) à la structure composée d'électrodes (21, 23).

5. Capteur micromécanique de pression et de force selon l'une des revendications précédentes, **caractérisé en ce que** l'épaisseur des plaques à membrane (3) est diminuée par des encoches de flexion (4) réalisées extérieurement, à proximité des extrémités, dans les plaques à membrane (3).

6. Capteur micromécanique de pression et de force selon l'une des revendications précédentes, **caractérisé en ce que** le coupleur (9) au centre de la chambre de mesure (19) est délimité par des cavités (7) réalisées des deux côtés dans la plaque de base (2).

7. Capteur micromécanique de pression et de force selon la revendication 6, **caractérisé en ce que** les cavités (7) formées dans la plaque de base (2) sont entourées d'électrodes de mesure circulaires (21).

8. Capteur micromécanique de pression et de force selon la revendication 7, **caractérisé en ce qu'**une contre-électrode (23) est disposée sur la plaque à membrane (3) face à l'électrode de mesure (21).

9. Capteur micromécanique de pression et de force selon l'une des revendications 3 à 8, **caractérisé en ce que** les rebords (14, 15) et le coupleur (9) de la plaque de base (2) sont reliés électriquement et mécaniquement aux plaques à membrane (3) par des liaisons eutectiques (10, 16).

10. Capteur micromécanique de pression et de force selon l'une des revendications précédentes, **caractérisé en ce que** la plaque de base (2) et la plaque à membrane (3) peuvent être raccordées à un conducteur de mise à la masse.
